# EUROPÄISCHE PATENTSCHRIFT

(11) **EP 1 263 554 B1**
(45) Veröffentlichungstag und Bekanntmachung des Hinweises auf die Patenterteilung: **07.12.2005**
(21) Anmeldenummer: 01929392.7
(22) Anmeldetag: 02.03.2001
(51) Int. Cl.: B25J 15/02, F15B 15/14

(54) **PARALLELGREIFER**
PARALLEL GRIPPER
PINCE PARALLELE

(30) Priorität: 15.03.2000 DE 20004757 U; 17.03.2000 DE 10013022
(43) Veröffentlichungstag der Anmeldung: 11.12.2002
(73) Patentinhaber: Schunk GmbH & Co. KG Fabrik für Spann- und Greifwerkzeuge, 74348 Lauffen (DE)
(72) Erfinder: MICHLER, Gerhard, 74360 Ilsfeld (DE); WINKLER, Ralf, 74226 Nordheim (DE)
(74) Vertreter: Friz, Oliver
(86) Internationale Anmeldenummer: PCT/EP2001/002384
(87) Internationale Veröffentlichungsnummer: WO 2001/068328

(56) Entgegenhaltungen:
- EP-A- 0 313 947
- EP-A- 0 790 106
- DE-A- 19 741 983

## Beschreibung

Die Erfindung betrifft einen Parallelgreifer mit einem Gehäuse und zwei verstellbaren Greifergrundbacken, welche in dem Gehäuse in einer Backenführungsausnehmung verschieblich geführt sind, wobei die Grundbacken über ein Keilhakengetriebe aufeinander zu- bzw. voneinander weg bewegbar sind und das Keilhakengetriebe über einen Kolben, welcher in dem Gehäuse geführt ist, verstellbar ist. Ein solcher Parallelgreifer ist aus der Patentschrift DE 19741983 A1 bekannt.

Die beiden Grundbacken, an denen Greiferfinger bildende Aufsätze montierbar sind, sind bei bekannten Ausführungsformen im Querschnitt und in Verschieberichtung betrachtet oftmals T-förmig ausgebildet, wobei der Querschenkel der T-Form werkstückabgewandt in einer entsprechend ausgebildeten Backenführungsausnehmung des Gehäuses verschieblich geführt ist. Es gibt auch Ausführungen mit Wälzkörpern. Um große Greifkräfte erzeugen zu können und die hierbei auftretenden Kippmomente aufnehmen zu können, muss eine entsprechend große Führungsbreite bei der Backenführung erreicht werden, was bedeutet, dass die Außenabmessung der Grundbacke, also die Breite in Richtung des quer verlaufenden Schenkels der T-Form, verglichen mit der Breite des eigentlichen Basiskörpers der Grundbacke sehr groß gewählt werden muss. Hieraus ergibt sich aber, dass die Breite der Keilhakenverbindung, die auch als Schrägzugbreite bezeichnet wird, und die notwendigerweise geringer ist als die Breite des Basiskörpers der Grundbacken, ebenfalls sehr gering ist. Dies wirkt aber wiederum der Übertragung von großen Greifkräften entgegen.

Des Weiteren ist man bestrebt, bei Parallelgreifern die Gehäusebreite so gering wie möglich zu halten, um den erforderlichen Bauraum zu reduzieren. Bei Reduzierung der Wandstärke des Gehäuses treten aber unerwünschte Verwindungen und Verformungen des Gehäuses, insbesondere bei der Einleitung und Übertragung von Greifkräften auf, die im Hinblick auf die zu erzielende Genauigkeit unerwünscht sind.

Hiervon ausgehend liegt der vorliegenden Erfindung die Aufgabe zugrunde, einen Parallelgreifer der eingangs beschriebenen Art dahingehend zu verbessern, dass einerseits hohe Greifkräfte übertragen und aufgenommen werden können, wobei insgesamt ein möglichst geringer Bauraum eingesetzt werden soll und dennoch eine hohe Genauigkeit bei der Automatisierung unter Verwendung dieses Parallelgreifers gewährleistet sein soll.

Diese Aufgabe wird bei einem Parallelgreifer der genannten Art erfindungsgemäß dadurch gelöst, dass der Kolben eine ovale oder im Wesentlichen rechteckförmige mit verrundeten Ecken ausgebildete Form aufweist und dass die Grundbacken beidseits jeweils wenigstens zwei im Querschnitt rechteck-, keil- oder trapezförmige und in Verschieberichtung erstreckte Führungsstege aufweisen und die Backenführungsausnehmung komplementär hierzu ausgebildete Führungsnuten aufweist und dass das Verhältnis der Wandstärke des Gehäuses - gemessen zwischen dem Grund der Führungsnuten und der Gehäuseaußenseite - zur Gehäusebreite - gemessen senkrecht zur Verschieberichtung der Grundbacken - wenigstens 0,2 beträgt und dass das Verhältnis der Schrägzugbreite des Keilhakengetriebes (Breite des Keilhakens) zur Außenbreite der Grundbacke wenigstens 0,4 beträgt.

Durch die Kombination der vorstehenden Merkmale wird bei einem gattungsgemäßen Parallelgreifer durch den Einsatz eines ovalen oder im Wesentlichen rechteckförmigen Kolbens eine optimale Ausnutzung der üblicherweise rechteckförmigen Geometrie von Parallelgreifergehäusen erreicht. Es kann also eine größtmögliche Stellkraft durch Ausnutzung der zur Verfügung stehenden größtmöglichen Kolbenfläche erreicht werden. Der Kolben ist vorzugsweise hydraulisch oder pneumatisch betätigbar.

Dadurch, dass die Grundbacken beidseits jeweils wenigstens zwei keil- oder trapezförmige Führungsstege aufweisen, kann die durch diese Führungsstege zusammen mit den Führungsnuten erreichte Führungsbreite entsprechend der Anzahl der Führungsstege vergrößert werden. Es ist daher möglich, dass, verglichen mit massiv ausgebildeten breitbauenden T-Nutenführungen, zwischen Grundbacken und Backenführungsausnehmung eine sehr geringe Außenbreite der Grundbacke verwirklicht wird oder, anders ausgedrückt, die Außenbreite der Grundbacke (gemessen von Führungssteg zu Führungssteg) ist nur geringfügig größer als die Breite des Basiskörpers der Grundbacken oder, wiederum anders ausgedrückt, die Breite des Basiskörpers der Grundbacken ist, verglichen zur Außenbreite der Grundbacken, sehr groß, was wiederum bedeutet, dass die Schrägzugbreite der Keilhakenverbindung, verglichen mit der Gesamtaußenbreite der Greifergrundbacke, sehr groß gewählt werden kann. Hierdurch können die großen Kräfte des ovalen oder im Wesentlichen rechteckförmigen Kolbens auf die Greifergrundbacken übertragen werden. Das Verhältnis der Breite des Keilhakens zur Außenbreite der Grundbacke beträgt wenigstens 0,4, vorzugsweise 0,5 - 0,7 und insbesondere 0,5 - 0,6.

Dadurch, dass ferner das Verhältnis der Wandstärke des Gehäuses zur Gesamtgehäusebreite wenigstens 0,2, vorzugsweise 0,23 - 0,3, insbesondere 0,23 - 0,27 beträgt, wird eine stabile Gestaltung des Greifergehäuses erreicht, die auch hohe Kippmomente bei der Übertragung und Einleitung von Greifkräften verwindungsfrei auszuhalten vermag.

Die Schweizer Patentschrift 800 201 zeigt den Einsatz mehrerer keilförmiger Führungsstege bei Backenführungen von zentrischen Spannfuttern.

Der Einsatz von Keilhakengetrieben bei Parallelgreifern ist vielfach bekannt geworden.

Es ist auch bereits der Vorschlag gemacht worden, ovale Stellkolben in Greifvorrichtungen einzusetzen.

Mit der vorliegenden Erfindung wurde ein insgesamt kompakter, extrem stabiler und zur Übertragung und Aufnahme großer Greifkräfte und Kippmomente geeigneter Parallelgreifer geschaffen.

Bei einer bevorzugten Ausführungsform des Parallelgreifers weist das Keilhakengetriebe einen durch den Kolben verstellbaren Keilhaken auf, der beidseits in schräg verlaufende Ausnehmungen der beiden Grundbacken eingreift.

Die Kopplung des Kolbens mit dem Keilhakengetriebe kann in an sich beliebiger Weise ausgebildet sein. Als besonders vorteilhaft hat es sich erwiesen, wenn sich der Keilhaken mit einem Stangenabschnitt durch eine Gehäuseöffnung am Boden der Backenführungsausnehmung hindurch in einen Zylinderraum erstreckt, der vorzugsweise von dem Gehäusekörper selbst gebildet wird, und dort mit dem Kolbenantrieb verbunden ist.

Es erweist sich auch als vorteilhaft, wenn die Führungsstege über die jeweilige gesamte Länge der Grundbacken erstreckt sind, um nicht nur eine möglichst große Führungsbreite, sondern auch eine große Führungslänge zu erreichen, was insbesondere die Aufnahme von Kippmomenten unterstützt.

Des Weiteren wird vorgeschlagen, dass das Verhältnis der Höhe der Führungsstege, die als Überstand der Führungsstege über die Seitenfläche des Basiskörpers der Grundbacken gemessen wird, zur Breite des Basiskörpers der Grundbacken (Basisbreite) zwischen 0,15 und 0,25, vorzugsweise zwischen 0,19 und 0,24 liegt. Es erweist sich insofern als besonders empfehlenswert, drei parallele übereinander angeordnete Führungsstege vorzugsweise über die gesamte Länge der Grundbacke vorzusehen.

Die Neigung der Flanken der Führungsstege beträgt vorteilhafter Weise zwischen 12° und 20°, vorzugsweise zwischen 14° und 17° zur Normalenrichtung der Führungsstege auf die Seitenfläche des Basiskörpers der Grundbacken.

Weitere Merkmale, Einzelheiten und Vorteile der Erfindung ergeben sich aus den Patentansprüchen und aus der beigefügten zeichnerischen Darstellung und nachfolgenden Beschreibung einer bevorzugten Ausführungsform der Erfindung. In der Zeichnung zeigt:
- Fig. 1: eine perspektivische explosionsartige Darstellung der Hauptbestandteile des erfindungsgemäßen Parallelgreifers und
- Fig. 2: eine vereinfachte Stirnansicht des Parallelgreifers nach Fig. 1 zur Veranschaulichung der Abmessungen.

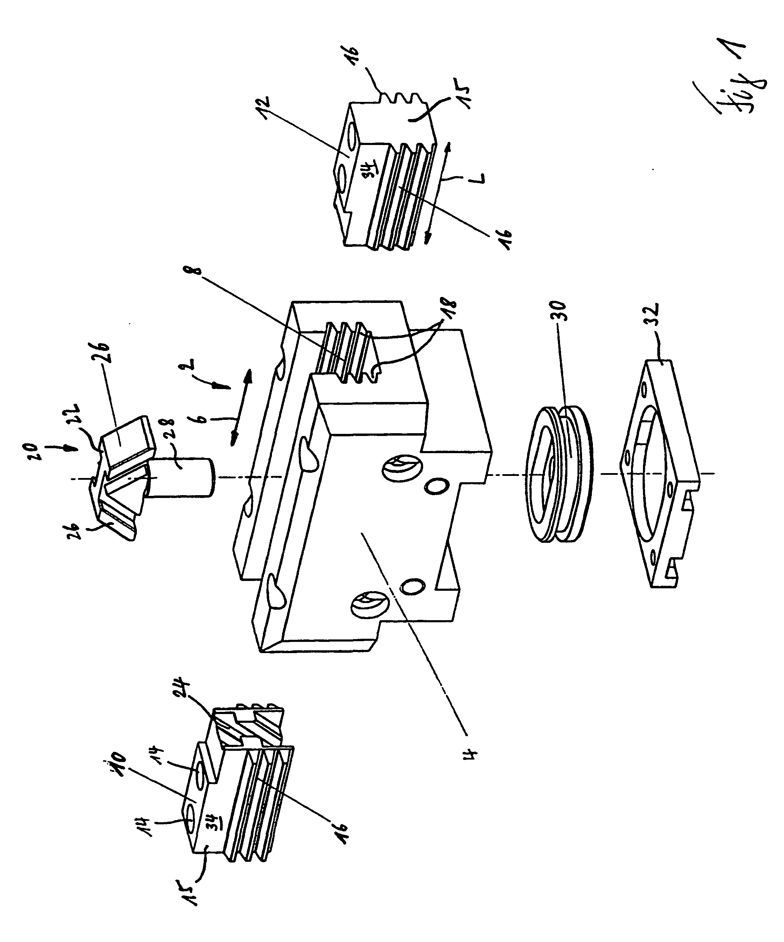

Fig. 1 zeigt einen insgesamt mit dem Bezugszeichen 2 bezeichneten Parallelgreifer. Dieser umfasst ein Greifergehäuse 4 mit in einer Längsrichtung 6 verlaufenden Backenführungsausnehmung 8 für Grundbacken 10 und 12, welche außerhalb des Gehäuses dargestellt sind und in Längsrichtung 6 in die Backenführungsausnehmung 8 einführbar und darin verschieblich sind. Auf einer Oberseite der Grundbacken 10, 12 sind Montageöffnungen 14 zum lösbaren Anbringen von Greiferfingerelementen im weitesten Sinne vorgesehen, die hier nicht weiter beschrieben werden sollen.

Die Grundbacken 10, 12 weisen jeweils beidseits in Längsrichtung 6 und damit in Verschieberichtung erstreckte Führungsstege 16 auf, die keil- oder trapezförmig mit abgeflachtem Ende ausgebildet sind. Bei jeder Grundbacke 10, 12 sind beidseits von deren Basiskörper 15 vorspringend drei übereinander angeordnete und über die gesamte Länge L der Grundbacke erstreckte Führungsstege 16 vorgesehen.

Die Backenführungsausnehmung 8 in dem Greifergehäuse 4 weist komplementär hierzu ausgebildete keil- oder trapezförmige Führungsnuten 18 auf, in welche die Führungsstege 16 eingreifen und darin in Längsrichtung 6 gleiten können, wobei die Führungsstege 16 im Wesentlichen spielfrei in die Führungsnuten 18 eingreifen, um bei der Aufnahme von Kräften oder Kippmomenten keine Positionsungenauigkeit zu erfahren, sondern die Kräfte und Momente verkippungsfrei an das Greifergehäuse 4 oder auf die Greiferfinger übertragen zu können.

Zum Verstellen der Greifergrundbacken 10, 12 ist ein insgesamt mit dem Bezugszeichen 20 bezeichnetes Keilhakengetriebe vorgesehen. Es umfasst einen Keilhaken 22, dessen oberer Teil in schräg verlaufende Ausnehmungen 24 der Grundbacken 10, 12 einführbare Gleitstückabschnitte 26 aufweist. Der Keilhaken 22 besitzt ferner einen unteren Stangenabschnitt 28, mit dem er eine nicht dargestellte Öffnung im Boden der Backenführungsausnehmung 8 durchgreift und in einen darunter angeordneten Zylinderraum des Greifergehäuses 4 eingreift. In diesem Zylinderraum ist ein Kolben 30 verschieblich angeordnet und der Zylinderraum ist über eine Bodenplatte 32 abgeschlossen. Der Stangenabschnitt 28 des Keilhakens 22 ist mit dem Kolben 30 verbunden. Der Zylinderraum mit dem Kolben 30 bildet eine hydraulische oder pneumatische Stelleinrichtung. Beim Aufwärtsbewegen des Kolbens 30 und damit des Keilhakens 22 gleiten die Gleitstückabschnitte 26 in den jeweiligen schrägen Ausnehmungen 24 und bewegen hierdurch die Grundbacken 10, 12 voneinander weg. Beim Abwärtsbewegen des Keilhakens 22 werden die Grundbacken 10, 12 aufeinander zu bewegt.

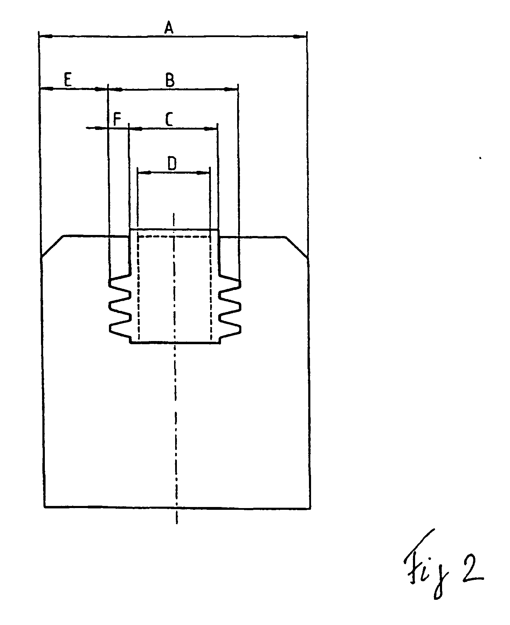

Durch die Mehrzahl von Führungsstegen 16 wird auf jeder Seite eine große Führungsbreite zur Aufnahme und Übertragung von Kräften und Momenten bereitgestellt. Fig. 2 zeigt die Führungsbreite F der Führungsstege 16. Hierunter ist die Höhe der Führungsstege 16 über der Breite des Basiskörpers 15 der Grundbacken 10, 12, also deren Erstreckung über die Seitenfläche 34 der Grundbacken 10, 12 gemeint. Durch die dort vorgesehenen jeweils drei Führungsstege 16 ist die insgesamt zur Verfügung stehende Führungsbreite auf jeder Seite dreimal F, wobei die gesamte Außenbreite B der Grundbacken lediglich beidseits um einmal F größer ist als die Basisbreite C des Basiskörpers 15 der Grundbacken. Dies wiederum bedeutet, dass bei vorgegebener Außenbreite B die Basisbreite C verhältnismäßig groß gewählt werden kann, was wiederum bedeutet, dass auch die Breite D des Keilhakens 22 bzw. des Gleitstückabschnitts 26 des Keilhakens 22 verglichen mit der Außenbreite B der Grundbacken sehr groß gewählt werden kann.

Bei gegebener Außenbreite B und ebenfalls gegebener Gehäusebreite A kann die Wandstärke E ebenfalls verhältnismäßig groß bemessen werden, so dass eine hohe Genauigkeit resultiert, da das Greifergehäuse auch bei den durch den ovalen Kolben 30 und die große Schrägzugbreite D des Keilhakens 22 übertragenen großen Kräften verwindungsfrei bleibt.

Nach einer ganz besonders bevorzugten Ausführungsform des erfindungsgemäßen Parallelgreifers werden nachfolgend die Abmessungen in drei Baugrößen gemäß nachfolgender Tabelle angegeben.

| Baugröße | Gehäusebreite A | Backenbreite B | Stegbreite C | Keilhakenbreite D | Wandstärke E | Führungsbreite F |
|---|---|---|---|---|---|---|
| Größe 1 | 36 | 17.5 | 12 | 9.5 | 9.25 | 2.75 |
| Größe 2 | 50 | 25.5 | 18 | 14 | 12.75 | 3.75 |
| Größe 3 | 72 | 37 | 26 | 21 | 17,5 | 5,5 |

## Patentansprüche

1. Parallelgreifer mit einem Gehäuse (4) und zwei verstellbaren Greifergrundbacken (10, 12), welche in dem Gehäuse (4) in einer Backenführungsausnehmung (8) verschieblich geführt sind, wobei die Grundbacken (10, 12) über ein Keilhakengetriebe (20) aufeinander zu bzw. voneinander weg bewegbar sind und das Keilhakengetriebe (20) über einen Kolben (30), welcher in dem Gehäuse geführt ist, verstellbar ist, **dadurch gekennzeichnet,**
**dass** der Kolben (30) eine ovale oder im Wesentlichen rechteckförmige mit verrundeten Ecken ausgebildete Form aufweist,
**dass** die Grundbacken (10, 12) beidseits jeweils wenigstens zwei im Querschnitt rechteck-, keil- oder trapezförmige und in Verschieberichtung (6) erstreckte Führungsstege (16) aufweisen und die Backenführungsausnehmung (8) komplementär hierzu ausgebildete Führungsnuten (18) aufweist,
**dass** das Verhältnis der Wandstärke (E) des Gehäuses (4) - gemessen zwischen dem Grund der Führungsnuten (18) und der Gehäuseaußenseite- zur Gehäusebreite (A) -gemessen senkrecht zur Verschieberichtung (6) der Grundbacken (10, 12) wenigstens 0,2 beträgt, und
**dass** das Verhältnis der Schrägzugbreite des Keilhakengetriebes (D) (20) zur Außenbreite (B) der Grundbacken (10, 12) wenigstens 0,4 beträgt.

2. Parallelgreifer nach Anspruch 1, **dadurch gekennzeichnet, dass** das Keilhakengetriebe (20) einen durch den Kolben (30) verstellbaren Keilhaken (22) aufweist, der beidseits in schräg verlaufende Ausnehmungen (24) der beiden Grundbacken (10, 12) eingreift.

3. Parallelgreifer nach Anspruch 1 oder 2, **dadurch gekennzeichnet, dass** sich ein Keilhaken (22) des Keilhakengetriebes (20) mit einem Stangenabschnitt (28) durch eine Gehäuseöffnung am Boden der Backenführungsausnehmung (8) hindurch in einen Zylinderraum erstreckt und dort mit dem Kolben (30) antriebsverbunden ist.

4. Parallelgreifer nach Anspruch 1, 2 oder 3, **dadurch gekennzeichnet, dass** sich die Führungsstege (16) über die gesamte Länge (L) der Grundbacken (10, 12) erstrecken.

5. Parallelgreifer nach einem der vorstehenden Ansprüche, **dadurch gekennzeichnet, dass** das Verhältnis der Höhe (F) der Führungsstege (16) zur Breite (C) des Basiskörpers der Grundbacken (Basisbreite) zwischen 0,15 und 0,25, vorzugsweise zwischen 0,19 und 0,24 liegt.

6. Parallelgreifer nach einem der vorstehenden Ansprüche, **dadurch gekennzeichnet, dass** die Neigung der Flanken der Führungsstege (16) zwischen 12° und 20° zur Normalenrichtung der Führungsstege (16) auf die Seitenfläche des Basiskörpers der Grundbacken beträgt.

7. Parallelgreifer nach einem der vorstehenden Ansprüche, **dadurch gekennzeichnet, dass** das Verhältnis des Durchmessers des Kolbens in Verschieberichtung der Grundbacken zum Durchmesser senkrecht zur Verschieberichtung zwischen 1,2 und 1,6 liegt.

## Claims

1. Parallel gripper having a housing (4) and two adjustable gripper base jaws (10, 12) which are displaceably guided in the housing (4) in a jaw guide recess (8), the base jaws (10, 12) being movable towards one another or away from one another by means of a wedge hook gear (20), and the wedge hook gear (20) being adjustable by means of a piston (30) which is guided in the housing, **characterized in**
**that** the piston (30) has an oval or substantially rectangular shape formed with rounded edges,
**that** the base jaws (10, 12) each have, on both sides, at least two guide fins (16) which are rectangular, wedge-shaped or trapezoidal in cross-section and extend in the displacement direction (6) and the jaw guide recess (8) has guide grooves (18) formed complementary thereto,
**that** the ratio of wall thickness (E) of the housing (4) - measured between the bottom of the guide grooves (18) and the outside of the housing - to the housing width (A) - measured perpendicular to the displacement direction (6) of the base jaws (10, 12) - is at least 0.2, and
**that** the ratio of the oblique pull width of the wedge hook gear (D) (20) to the external width (B) of the base jaws (10, 12) is at least 0.4.

2. Parallel gripper according to Claim 1, **characterized in that** the wedge hook gear (20) has a wedge hook (22) which is adjustable by the piston (30) and engages on both sides in oblique recesses (24) of the two base jaws (10, 12).

3. Parallel gripper according to Claim 1 or 2, **characterized in that** a rod section (28) of a wedge hook (22) of the wedge hook gear (20) extends through a housing opening in the bottom of the jaw guide recess (8) into a cylindrical space and is driveably connected there to the piston (30).

4. Parallel gripper according to Claim 1, 2 or 3, **characterized in that** the guide fins (16) extend over the total length (L) of the base jaws (10, 12).

5. Parallel gripper according to any of the preceding Claims, **characterized in that** the ratio of the height (F) of the guide fins (16) to the width (C) of the base body of the base jaws (base width) is between 0.15 and 0.25, preferably between 0.19 and 0.24.

6. Parallel gripper according to any of the preceding Claims, **characterized in that** the inclination of the flanks of the guide fins (16) is between 12° and 20° to the direction of the guide fins (16) normal to the lateral surface of the base body of the base jaws.

7. Parallel gripper according to any of the preceding Claims **characterized in that** the ratio of the diameter of the piston in the displacement direction of the base jaws to the diameter perpendicular to the displacement direction is between 1.2 and 1.6.

## Revendications

1. Pince parallèle comportant un carter (4) et deux mâchoires de base réglables (10, 12) qui sont guidées de façon mobile dans le carter (4) dans un évidement de guidage de mâchoires (8), les mâchoires de base (10, 12) étant mobiles l'une vers l'autre ou l'une à l'opposé de l'autre par l'intermédiaire d'une commande à crochet trapézoïdal (20) et la commande à crochet trapézoïdal (20) étant réglable par l'intermédiaire d'un piston (30) qui est guidé dans le carter, **caractérisée en ce que**
le piston (30) présente une forme ovale ou essentiellement rectangulaire avec des angles arrondis,
**en ce que** les mâchoires de base (10, 12) présentent chacune, de chaque côté, au moins deux nervures de guidage (16) qui sont rectangulaires, cunéiformes ou trapézoïdales vues en coupe transversale et s'étendent dans le sens de déplacement (6), et l'évidement de guidage des mâchoires (8) présente des rainures de guidage (18) de forme complémentaire à celle des nervures de guidage,
**en ce que** le rapport entre l'épaisseur de paroi (E) du carter (4), mesurée entre le fond des rainures de guidage (18) et le côté extérieur du carter, et la largeur du carter (A), mesurée perpendiculairement au sens de déplacement (6) des mâchoires de base (10, 12) est d'au moins 0,2 et
**en ce que** le rapport entre la largeur de traction oblique de la commande à crochet trapézoïdal (D) (20) et la largeur extérieure (B) des mâchoires de base (10, 12) est d'au moins 0,4.

2. Pince parallèle selon la revendication 1, **caractérisée en ce que** la commande à crochet trapézoïdal (20) présente un crochet trapézoïdal réglable par le piston (30) qui s'engage de chaque côté dans des évidements (24) s'étendant à l'oblique des deux mâchoires de base (10, 12).

3. Pince parallèle selon la revendication 1 ou 2, **caractérisée en ce qu'**un crochet trapézoïdal (22) de la commande à crochet trapézoïdal (20) s'étend avec un segment de tige (28) à travers une ouverture du carter au fond de l'évidement de guidage des mâchoires (8) dans un espace cylindrique et y est relié de manière solidaire par entraînement avec le piston (30).

4. Pince parallèle selon la revendication 1, 2 ou 3, **caractérisée en ce que** les nervures de guidage (16) s'étendent sur toute la longueur (L) des mâchoires de base (10, 12).

5. Pince parallèle selon l'une des revendications précédentes, **caractérisée en ce que** le rapport entre la hauteur (F) des nervures de guidage (16) et la largeur (C) du corps de base des mâchoires de base (largeur de base) est compris entre 0,15 et 0,25, de préférence entre 0,19 et 0,24.

6. Pince parallèle selon l'une des revendications précédentes, **caractérisée en ce que** l'inclinaison des flancs des nervures de guidage (16) par rapport à la normale des nervures de guidage (16) sur la surface latérale du corps de base des mâchoires de base est comprise entre 12° et 20°.

7. Pince parallèle selon l'une des revendications précédentes, **caractérisée en ce que** le rapport entre le diamètre du piston dans le sens de déplacement des mâchoires de base et le diamètre perpendiculairement au sens de déplacement est compris entre 1,2 et 1,6.
